# EUROPÄISCHE PATENTANMELDUNG

(11) **EP 2 022 576 A1**
(43) Veröffentlichungstag der Anmeldung: **11.02.2009**
(21) Anmeldenummer: 07015322.6
(22) Anmeldetag: 03.08.2007
(51) Int. Cl.: B21H 5/02, B23F 19/05

(54) **Arbeitsverfahren zur Verbesserung des Laufverhaltens von Zahnrädern und Glättvorrichtung zur Durchführung des Verfahrens**

(71) Anmelder: Linnenbrink, Wolfgang, 34414 Warburg (DE)
(72) Erfinder: Linnenbrink, Wolfgang, 34414 Warburg (DE)
(74) Vertreter: Rolf, Gudrun

(57) **Zusammenfassung**

Es wird ein Arbeitsverfahren zur Verbesserung des Laufverhaltens von bei einer Zahnradprüfung negativ auffällig gewordenen Zahnrädern (3) und eine Glättvorrichtung zur Durchführung des Verfahrens zur Verfügung gestellt, mit dem aus dem Produktionsprozess aussortierte Zahnräder schnell und gezielt so optimiert werden können, dass sie wieder in den Produktionsprozess zurückgeführt werden können, was dadurch erreicht wird, dass die Zahnflanken eines zu bearbeitenden Zahnrades (3) in einem ersten Verfahrensschritt zunächst in einer ersten Zahnradbearbeitungsmaschine (1) mit einem mit abrasiven Mitteln beschichteten Bearbeitungsrad (4) von an den Oberflächen der Zahnflanken anhaftenden Partikeln oder von davon hervorstehenden geringen Erhebungen mechanisch befreit werden und dass anschIießend in einem zweiten Verfahrensschritt in einer zweiten, als Glättmaschine bekannten Zahnradbearbeitungsmaschine (2) das Zahnrad (3) zwischen zahnradförmigen Rollwerkzeugen, den sogenannten Glätträdern (5) eingespannt und materialabtragsfrei gerollt wird. Die Erfindung betrifft auch eine Vorrichtung zur Durchführung des Verfahrens.

## Beschreibung

Die Erfindung betrifft ein Arbeitsverfahren zur Verbesserung des Laufverhaltens von Zahnrädern sowie eine Glättvorrichtung zur Durchführung des Arbeitsverfahrens.

Bei der Produktion von Zahnrädern, insbesondere von Kraftfahrzeuggetrieben, ist es üblich die erzeugten Zahnräder vollautomatisch oder halbautomatisch durch Zahnradprüfgeräte auf mechanische und akustische Auffälligkeiten zu testen, um eine optimale Verzahnungsqualität und eine möglichst große Geräuscharmut der Getriebe verwirklichen zu können, wobei auffällige Zahnräder aus dem Produktionsprozess aussortiert werden. Um solche aussortierten Zahnräder doch noch verwenden zu können wird versucht, sie durch unterschiedliche Arbeitsverfahren und die verschiedensten Vorrichtungen wieder in den Produktionsprozess zurückführen zu können. Dies leistet z.B. eine bekannte Vorrichtung zum Glätten von Zahnrädern, welche in der EP 1 582 277 A1 veröffentlicht ist, in der zu bearbeitende Zahnräder zwischen zahnradförmigen Rollwerkzeugen, sogenannten Glätträdern eingespannt und materialabtragsfrei gerollt werden, wobei beispielsweise leichte Erhebungen auf den Zahnflanken zumindest teilweise oder vollständig plastisch weggedrückt werden. Falls ein solches Glätten eines zu bearbeitenden Zahnrades nicht ausreicht, kann die Oberfläche der Zahnflanken auch in anderen bekannten Vorrichtungen durch ein vorsichtiges Abfräsen oder Abschleifen sogenannter Nicks, minimalen Aufwerfungen neben Feinkerben, wieder auf die gewünschte Zahnflankenform zurück geschliffen werden.

Ebenso können Grate und andere geringe Erhebungen, anhaftender Zunder einer vorhergehenden Wärmebehandlung oder andere Partikel quasi schleifend wieder entfernt werden.

Nachteilig an den bekannten Arbeitsverfahren zur Verbesserung des Laufverhaltens von Zahnrädern ist, dass die benutzten Glättvorrichtungen oftmals nur alternativ eingesetzt werden können und wenn überhaupt möglich zeitaufwändig umgebaut werden müssen, wenn sie von einem abrasiven Schleifprozess zur Entfernung von Nicks auf eine materialabtragsfreie Roll-Glättvorrichtung umgebaut werden sollen.

Aufgabe der Erfindung ist es, ein Arbeitsverfahren zur Verbesserung des Laufverhaltens von Zahnrädern zur Verfügung zu stellen, mit dem aus dem Produktionsprozess aussortierte Zahnräder schnell und gezielt so optimiert werden können, dass sie wieder in den Produktionsprozess zurückgeführt werden können, sowie eine Glättvorrichtung zur Durchführung dieses Arbeitsverfahrens zur Verfügung zu stellen, die schnell und einfach die auszuführenden Arbeiten durchführen kann, ohne dass aufwändige Umbaumaßnahmen oder größerer logistischer Aufwand wie Transport oder Zwischenlagerung erforderlich werden.

Die Lösung dieser Aufgabe erfolgt in Verbindung mit den Oberbegriffsmerkmalen erfindungsgemäß durch die Merkmale der kennzeichnenden Teile der Patentansprüche 1 und 3.

Das Arbeitsverfahren zur Verbesserung des Laufverhaltens, insbesondere des akustischen Verhaltens von Zahnrädern ist dadurch gekennzeichnet, dass die Zahnflanken eines zu bearbeitenden Zahnrades in einem ersten Verfahrensschritt zunächst in einer ersten Zahnradbearbeitungsmaschine mit einem mit abrasiven Mitteln, etwa Diamanten, beschichteten Bearbeitungsrad von von den Oberflächen der Zahnflanken hervorstehenden Fehlern wie sogenannten Nicks, minimalen Aufwerfungen neben Feinkerben, Graten oder sonstigen geringen Erhebungen oder von darauf anhaftendem Zunder einer vorhergehenden Wärmebehandlung oder anderen Partikeln mechanisch, quasi schleifend befreit werden. Solche Nicks können während des Arbeitsprozesses, etwa beim Transport oder Handling der Werkstücke auf den Oberflächen der Zahnflanken entstehen.

Die Beschädigungsverminderung erfolgt dadurch, dass beide Räder miteinander in Eingriff gebracht werden und unter einer Bremslast des nicht angetriebenen Rades oder bremslastfrei, aber gegeneinander verspannt, verdreht werden, so dass je nach Bedarf eine Ein-Flanken- oder Zwei-Flanken-Bearbeitung der Zahnflanken erfolgt. Im anschließenden zweiten Verfahrensschritt werden in einer zweiten, als Glättmaschine bekannten Zahnradbearbeitungsmaschine das zu bearbeitende Zahnrad zwischen zahnradförmigen Rollwerkzeugen, den sogenannten Glätträdern eingespannt und matarialabtragsfrei gerollt, wobei quasi eine plastische Verformung von noch über den Zahnflanken hervorstehenden Erhebungen erfolgt, wobei auch neben minimalen Aufwerfungen liegende Feinkerben wieder verfüllt werden, so dass eine erhebliche Oberflächenverbesserung der Zahnflanken erfolgt, wodurch sich die bearbeiteten Zahnräder nach nochmaligem Durchgang durch eine Zahnradprüfvorrichtung oftmals als wieder den geforderten Toleranzen entsprechend erweisen.

Besonders vorteilhaft an dem erfinderischen Arbeitsverfahren ist, dass je nach Art des erkannten Fehlers der Zahnradprüfung ein fehlerhaftes Zahnrad nur der ersten Zahnbearbeitungsmaschine oder nur der zweiten Zahnbearbeitungsmaschine oder zunächst der ersten und anschließend der zweiten Zahnbearbeitungsmaschine zugeführt werden kann, so dass hier in Abhängigkeit von dem tatsächlich festgestellten Fehler eines Zahnrades nur die wirklich erforderlichen Arbeitsschritte des Arbeitsverfahrens durchgeführt werden müssen, was die Wirtschaftlichkeit des Arbeitsverfahrens weiter steigert. Eine Umrüstung einer einzelnen Zahnradbearbeitungsmaschine ist nicht notwendig und durch die unmittelbar benachbarte Anordnung ein Transport und eine Zwischenlagerung unnötig, so dass die erfinderische Glättvorrichtung höchst rationell und wirtschaftlich arbeitet.

Die Glättvorrichtung selber zeichnet sich dadurch aus, dass die erste und die zweite Zahnradbearbeitungsmaschine unmittelbar nebeneinander oder sogar in einem gemeinsamen Maschinengestell nebeneinander angeordnet sind, wodurch alle für eine nachträgliche Optimierung aussortierter Zahnräder bekannte Vorrichtungen direkt zugänglich und unmittelbar betriebsbereit vorgehalten werden können, wobei die zweite Bearbeitungsmaschine bereits ein Zahnrad fertig bearbeiten kann, welches zuvor in der ersten Zahnradbearbeitungsmaschine bearbeitet worden ist, welche nun zeitgleich bereits das nächste zu optimierende Zahnrad vorbearbeitet. Einer Umrüstung einer einzelnen Vorrichtung von einer solchen mit einem Materialabtrag zu einer solchen ohne einen Materialabtrag wird damit vorteilhaft vermieden.

Weitere vorteilhafte Ausgestaltungen der erfinderischen Glättvorrichtung ergeben sich im Zusammenhang mit den weiteren Vorrichtungsansprüchen.

Dadurch, dass der Achsabstand zwischen der Drehachse des Bearbeitungsrades der ersten Zahnradbearbeitungsmaschine und der Drehachse des zu bearbeitenden Zahnrades für jede zur bearbeitende Zahnradpaarung konstant ist, lässt sich eine Einflankenberührung des zu bearbeitenden Zahnrades erzeugen, wobei dessen freie Drehung durch ein Stützmoment in seiner Lagerung gebremst wird.

Bei einer anderen Ausführungsform der ersten Zahnradbearbeitungsmaschine lässt sich der Achsabstand zwischen der Drehachse des Bearbeitungsrades und der Drehachse des zu bearbeitenden Zahnrades variieren, so dass eine druckbehaftete Zweiflankenberührung der beiden beteiligten Räder erzeugt werden kann, die dabei eine gegenseitige Relativbewegung der beteiligten Zahnflanken erfahren. Das Bearbeitungsrad der ersten Zahnradbearbeitungsmaschine ist vorteilhafterweise diamantbeschichtet, so dass die Oberfläche der Zahnflanken abrasiv, also materialabhebend nachbearbeitet werden kann, wobei entweder das Bearbeitungsrad oder das zu bearbeitende Zahnrad auch oszillierbar gelagert sein kann, ebenso wie das Bearbeitungsrad oder das zu bearbeitende Zahnrad starr oder pendelnd darin eingespannt sein können.

Entsprechend einer weiteren vorteilhaften Ausgestaltung der Erfindung ist die zweite Zahnradbearbeitungsmaschine mit drei identischen oder unterschiedlichen Glätträdern ausgestattet, wobei im letzten Fall jedes Glättrad andere Bereiche eines Zahnes optimieren kann. Auch hier ist es vorteilhaft möglich, dass das zu bearbeitende Zahnrad in der zweiten Zahnradbearbeitungsmaschine oszillierbar gelagert ist und die Glätträder gegebenenfalls pendeln aufgehängt sind.

Nachfolgend wird das Arbeitsverfahren anhand einer Fig. beispielhaft beschrieben. Es zeigt:

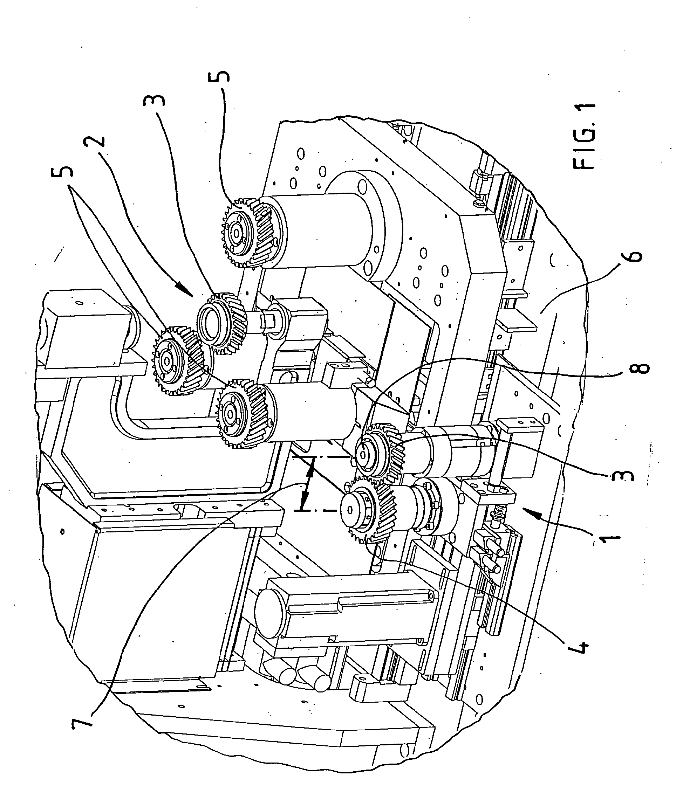

- Fig. 1: eine räumliche Teilansicht der erfindungsgemäßen Glättvorrichtung.

Ein aus dem Produktionsprozess ausgesondertes Zahnrad 3 wird zur Optimierung seiner Verzahnungsqualität und zur Verminderung seines Laufgeräusches zunächst auf den Aufspanndorn 8 einer ersten Zahnradbearbeitungsmaschine 1 aufgesetzt, wobei dieses Zahnrad 3 mit einem diamantbeschichteten Bearbeitungsrad 4 in Eingriff kommt, wobei die Oberflächen der Zahnflanken des Zahnrades 3 von davon hervorstehenden oder darauf anhaftenden Fehlern wie minimale Aufwerfungen neben Feinkerben, Graten, geringen Erhebungen, anhaftendem Zunder und anderen Partikeln mechanisch befreit werden, wobei dieser sehr feine Schleifprozess keinen Einfluss auf die eigentliche Zahnform des Zahnrades 3 nimmt, sondern nur hervorstehende Beschädigungen von den Oberflächen der Zahnflanken entfernt. Anschließend wird das Zahnrad 3 vom Spanndorn 8 der ersten Zahnradmaschine 1 abgenommen und auf eine Auflage 9 der zweiten Bearbeitungsmaschine 2 aufgelegt, die drei identische oder unterschiedliche Glätträder 5 aufweist, die radial auf das Zahnrad 3 zugestellt werden und unter Aufbringen eines Anpressdruckes die Flächen der Zahnflanken nach Art von Rollwerkzeugen glätten, in dem noch hervorstehende leichte Erhebungen materialabtragsfrei durch eine plastische Verformung weggedrückt werden, wodurch eine erhebliche Oberflächenverbesserung, insbesondere nach dem erfolgten Schleifvorgang in der ersten Zahnradbearbeitungsmaschine 1, eintritt.

Anschließend kann das bearbeitete Zahnrad 3 entnommen und erneut einer Prüfmaschine zugeführt werden, deren Ergebnis nach erfolgreicher Bearbeitung des Zahnrades 3 dazu geführt haben sollte, dass dieses in den Produktionsprozess zurückfließen kann. Anderenfalls könnte es ein weiteres mal das erfinderische Arbeitsverfahren durchlaufen oder müsste endgültig als Ausschuss gelten.

## Patentansprüche

1. Arbeitsverfahren zur Verbesserung des Laufverhaltens von Zahnrädern, insbesondere zur Beschädigungsentfernung an bei einer Zahnradprüfung negativ auffällig gewordenen Zahnrädern (3), **dadurch gekennzeichnet, dass** die Zahnflanken eines zu bearbeitenden Zahnrades (3) in einem ersten Verfahrensschritt zunächst in einer ersten Zahnradbearbeitungsmaschine (1) mit einem mit abrasiven Mitteln beschichteten Bearbeitungsrad (4) von an den Oberflächen der Zahnflanken anhaftendem Zunder einer vorherigen Wärmebehandlung oder anderen Partikeln oder von davon hervorstehenden geringen Erhebungen wie sogenannten Nicks, beim Arbeitsprozess entstehende Beschädigungen in Form minimaler Aufwerfungen neben Feinkerben oder von Graten mechanisch befreit werden, in dem beide Räder (3;4) miteinander in Eingriff gebracht werden und unter einer Bremslast des nicht angetriebenen Rades (3) oder bremslastfrei unter einer gegenseitigen Verspannung gegeneinander verdreht werden und dass anschließend in einem zweiten Verfahrensschritt in einer zweiten, als Glättmaschine bekannten Zahnradbearbeitungsmaschine (2) das Zahnrad (3) zwischen zahnradförmigen Rollwerkzeugen, den sogenannten Glätträdern (5) eingespannt und materialabtragsfrei gerollt wird.

2. Arbeitsverfahren nach Anspruch 1, **dadurch gekennzeichnet, dass** je nach Art des erkannten Fehlers der Zahnradprüfung ein fehlerhaftes Zahnrad (3) nur der ersten Zahnbearbeitungsmaschine (1) oder nur der zweiten Zahnbearbeitungsmaschine (2) oder zunächst der ersten Zahnbearbeitungsmaschine (1) und dann der zweiten Zahnbearbeitungsmaschine (2) zugeführt wird.

3. Glättvorrichtung zur Durchführung des Arbeitsverfahrens nach Anspruch 1, **dadurch gekennzeichnet, dass** die erste und die zweite Zahnradbearbeitungsmaschine (1 ;2) nebeneinander oder in einem gemeinsamen Maschinengestell (6) unmittelbar nebeneinander angeordnet sind.

4. Glättvorrichtung nach Anspruch 3, **dadurch gekennzeichnet, dass** der Achsabstand (7) zwischen der Drehachse des Bearbeitungsrades (4) und der Drehachse des zu bearbeitenden Zahnrades (3) in der ersten Zahnradbearbeitungsmaschine (1) fix ist und eine Einflankenberührung des zu bearbeitenden Zahnrades (3) erzeugt ist.

5. Glättvorrichtung nach Anspruch 3, **dadurch gekennzeichnet, dass** der Achsabstand (7) zwischen der Drehachse des Bearbeitungsrades (4) und der Drehachse des zu bearbeitenden Zahnrades (3) in der ersten Zahnradbearbeitungsmaschine (1) variabel ist und eine Zweiflankenberührung der Räder (3;4) erzeugt ist.

6. Glättvorrichtung nach Anspruch 3 - 5, **dadurch gekennzeichnet, dass** das Bearbeitungsrad (4) der ersten Zahnradbearbeitungsmaschine (1) diamantbeschichtet ist.

7. Glättvorrichtung nach Anspruch 3 - 6, **dadurch gekennzeichnet, dass** das Bearbeitungsrad (4) oder das zu bearbeitende Zahnrad (3) der ersten Zahnradbearbeitungsmaschine (1) oszillierbar gelagert ist.

8. Glättvorrichtung nach Anspruch 3 - 7, **dadurch gekennzeichnet, dass** das die Drehachsen des Bearbeitungsrades (4) und/ oder des zu bearbeitenden Zahnrades (3) der ersten Zahnradbearbeitungsmaschine (1) starr oder pendelnd ausgeführt sind.

9. Glättvorrichtung nach Anspruch 3 - 8, **dadurch gekennzeichnet, dass** die zweite Zahnradbearbeitungsmaschine (2) drei identische oder unterschiedliche Glätträder (5) aufweist.

10. Glättvorrichtung nach Anspruch 3 - 9, **dadurch gekennzeichnet, dass** das zu bearbeitende Zahnrad (3) in der zweiten Zahnradbearbeitungsmaschine (2) oszillierbar gelagert ist.
